# FASCICULE DE BREVET EUROPEEN

(11) **EP 1 156 594 B1**
(45) Date de publication et mention de la délivrance du brevet: **25.03.2009**
(21) Numéro de dépôt: 01450007.8
(22) Date de dépôt: 15.05.2001
(51) Int. Cl.: H04B 3/54

(54) **Dispositif de transfert de données sur un réseau alimenté de façon intermittente en courant continu**
Daten-übertragung über ein Netz mit intermittierendem Gleichstrom
Data transfer over an intermittently DC powered network

(30) Priorité: 15.05.2000 FR 0006150
(43) Date de publication de la demande: 21.11.2001
(73) Titulaire: Ortais, Paul, 91300 MASSY (FR)
(72) Inventeur: Ortais, Paul, 91300 MASSY (FR)

(56) Documents cités:
- EP-A- 0 718 152
- US-A- 3 811 126
- US-A- 5 844 327

## Description

La présente invention se rapporte à un dispositif de transfert de données, notamment informatique, sur un réseau alimenté de façon intermittente, susceptible d'équiper des réseaux électriques existants dans différents domaines tels que les transports routiers ou les transports ferroviaires par exemple.

Dans le domaine des transports routiers, les remorques sont de plus en plus souvent équipées de capteurs et de dispositifs embarqués qui permettent de générer de nombreux paramètres se rapportant à la température ambiante, ou à la répartition des charges par exemple. De manière générale, les informations acquises par les capteurs sont acheminées vers le tracteur où se trouvent normalement les moyens de pilotage ou les moyens de communication au conducteur ou à l'exploitant. En sens inverse, les moyens de pilotage ou le conducteur transmettent des ordres d'activation ou de configuration aux dispositifs embarqués situés dans la remorque.

Pour assurer ces liaisons, ces installations nécessitent un câblage dédié à la transmission des données ou des instructions.

Aussi, on envisage de pré-câbler les nouvelles remorques en sortie d'usine de manière à disposer d'un premier réseau câblé pour les systèmes d'éclairage et d'alarme et d'un second réseau dédié uniquement à la transmission des données.

Cette solution n'est pas satisfaisante en raison du surcoût généré par ce double réseau câblé et de l'incompatibilité créée avec le reste du parc existant.

Dans le cas des remorques existantes équipées d'un premier réseau câblé pour les systèmes d'éclairage et d'alarme, si l'on souhaite les équiper de dispositifs embarqués, une première solution consiste à réaliser un second réseau câblé dédié uniquement à la transmission de données. Comme précédemment, cette solution n'est pas satisfaisante en raison du coût généré par la réalisation de ce second réseau et de la perte de compatibilité.

Dans les deux cas, une autre solution consiste à utiliser les ondes radio pour la transmission des données et des instructions. Toutefois, cette solution est relativement complexe et coûteuse en mettre en oeuvre. Par ailleurs, les remorques sont en règle générale dépourvues de sources d'énergie si bien qu'il est nécessaire de prévoir un accumulateur ou une batterie qu'il faut recharger pour alimenter les dispositifs embarqués dans la remorque.

Un autre ensemble de solutions propose d'utiliser le premier réseau câblé existant.

Parmi celles-ci, une première solution consiste à transmettre les données ou les instructions par l'utilisation d'une haute fréquence appropriée superposée au courant continu utilisé pour alimenter les systèmes d'éclairage et d'alarme. Toutefois, cette solution n'est pas satisfaisante car elle est gourmande en énergie, rayonnante, procure un rendement désastreux et perturbe le circuit existant.

Une autre solution est proposée dans la demande de brevet FR-2.708.360 au nom du demandeur. Elle consiste à insérer au niveau du réseau électrique existant un dipôle à seuil de conductance électrique en série avec chaque charge existante.

Dans ce cas, les dispositifs embarqués sont disposés en parallèle par rapport aux charges existantes. Dans le cas d'une remorque par exemple, les charges fonctionnent généralement à une tension nominale de 24 V, de 12 V aux Etats Unis, et le seuil des dipôles à seuil de conductance a une valeur inférieure à la tension nominale, par exemple 20 V. Pour des tensions inférieures à 20 V, les dipôles sont bloquants si bien que le courant n'alimente pas les charges mais sert à la transmission de données. Dès que le courant dépasse 20 V, si on cherche par exemple à alimenter le système d'éclairage, les dipôles à seuil de conductance sont passants et le courant alimente les charges. A ce moment, aucune donnée ou instruction ne peut être transmise. Les dipôles à seuil de conductance sont en général des semi-conducteurs, le changement d'état étant engendré par un phénomène d'avalanche.

Même si cette solution permet d'utiliser le réseau câblé existant avec des aménagements relativement réduits, elle ne donne pas pleinement satisfaction pour les raisons suivantes.

Tout d'abord, l'utilisation de semi-conducteurs à avalanche génère des pertes de tension importantes, compliquant le bilan de puissance du système d'informations.

Ensuite, la commutation par avalanche est brutale et source d'un bruit électromagnétique important, contraignant tant en terme d'environnement que de protection des installations.

De plus, le semi-conducteur à avalanche induit des fuites de courant non négligeables dans son état bloqué, ce qui limite l'efficacité du système d'information, en particulier quand celui-ci doit être discret par rapport à l'installation existante.

Enfin, le dispositif à avalanche demande une procédure d'extinction pour revenir à son état bloqué, rendant compliquée la reprise du dialogue après le fonctionnement comme alimentation.

Aussi, la présente invention vise à pallier les inconvénients de l'art antérieur en proposant un dispositif pour la transmission de données, notamment informatique, utilisant un réseau câblé existant qui ne demande que des aménagements relativement peu importants, qui ne perturbe pas le fonctionnement du réseau existant et n'engendre aucun rayonnement.

A cet effet, l'invention propose un dispositif de transfert de données sur un réseau comprenant des charges d'origine alimentées de façon intermittente par une première source, caractérisé en ce qu'il comprend une seconde source pour alimenter au moins une nouvelle charge, des redresseurs étant prévus au niveau des charges d'origine et des nouvelles charges pour les isoler respectivement de la seconde source et de la première source.

Ainsi, le dispositif de l'invention permet l'utilisation du réseau existant lorsque ce dernier n'est pas alimenté par la première source.

De préférence, ce dispositif comprend des moyens pour piloter la seconde source afin de la rendre active uniquement lorsque la première source est inactive.

Selon une première application, il comprend un ordinateur maître disposé au niveau de la seconde source susceptible de dialoguer avec un ordinateur esclave, l'ordinateur maître étant équipé de moyens pour piloter la seconde source.

Dans ce cas, le dialogue entre les deux ordinateurs est obtenu par modulation à haute fréquence, les deux ordinateurs étant équipés chacun d'un commutateur rapide permettant également la modulation.

D'autres caractéristiques et avantages ressortiront de la description qui va suivre du dispositif selon l'invention, description donnée à titre d'exemple uniquement et en regard des dessins annexés sur lesquels :
- la figure 1 est une vue schématique d'un ensemble routier composé d'un tracteur et d'une remorque,
- la figure 2 est un schéma illustrant un réseau existant simplifié,
- la figure 3 est un schéma du dispositif de l'invention à partir du réseau existant de la figure 2,
- la figure 4 est un schéma illustrant un exemple d'utilisation pour transmettre des données entre deux ordinateurs placés de part et d'autre du connecteur d'attelage,
- la figure 5 est un schéma illustrant un exemple d'utilisation dans le cas de remorques multiples, et
- la figure 6 est un schéma illustrant un autre exemple d'utilisation pour recharger des accumulateurs disposés dans la remorque.

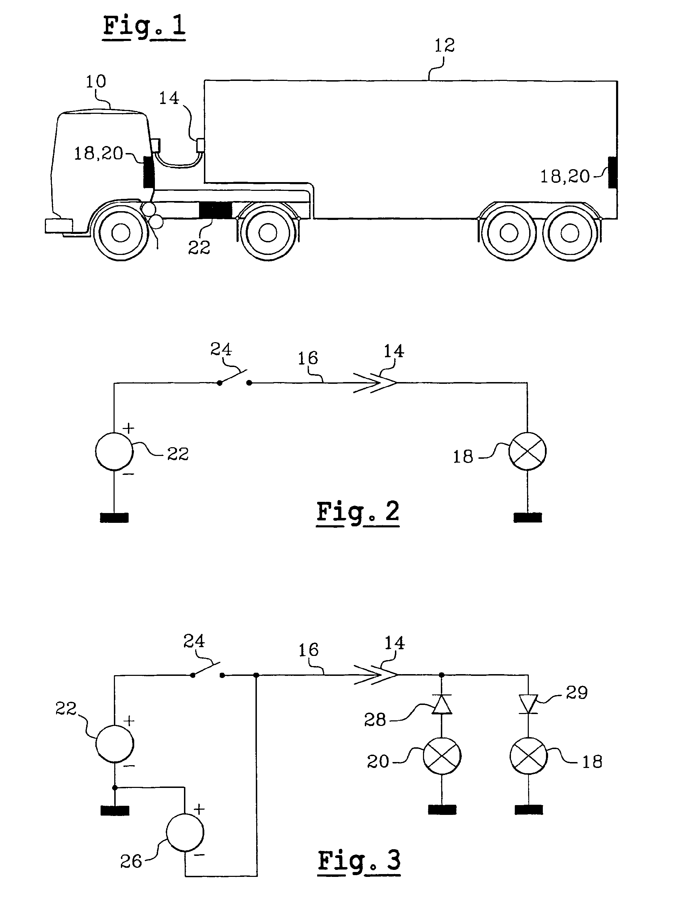

Sur la figure 1, on a représenté schématiquement un ensemble routier composé d'un tracteur 10 et d'une remorque 12 reliés par un connecteur d'attelage 14 qui relie le réseau filaire de la remorque à celui du tracteur afin que ces deux réseaux ne forment plus qu'un seul réseau filaire 16.

Au niveau de la remorque 12, le réseau 16 comprend des charges d'origine 18 et de nouvelles charges 20 telles que des dispositifs de saisie d'informations et des dispositifs de commande d'actionneurs.

Les charges d'origine, par exemple les ampoules du système d'éclairage, fonctionnent à une certaine tension, appelée tension de puissance, de l'ordre de 24 V.

Concernant les dispositifs de saisie d'informations dans la remorque, on retrouve des dispositifs susceptibles de mesurer des masses, en particulier la charge des essieux, de mesurer l'évolution des paramètres de freinage tels que la pression du circuit de freinage, de mesurer en temps réel des pressions de pneus, de contrôler l'usure, en particulier des freins, ou l'état des dispositifs antiblocage ou antipatinage.

On peut également prévoir des dispositifs de saisie d'informations relatives à l'accès des personnes, aux marchandises transportées, notamment l'identification des marchandises lors de leurs manipulations de chargement et déchargement, ainsi qu'aux conditions d'environnement telles que la température, la pression, l'hygrométrie, les vibrations et les chocs.

Au niveau du tracteur, le réseau 16 comprend une source de tension 22 susceptible de fournir la tension de commande, des commandes 24 pour actionner les charges d'origine 18, sous forme d'interrupteurs par exemple, des moyens de visualisation pour informer le conducteur ainsi que des moyens de pilotage, renseignés par les dispositifs de saisie et susceptibles de piloter les dispositifs de commande d'actionneurs.

Selon l'invention, le réseau 16 servant à l'alimentation de façon intermittente des charges 18 d'origine sert également à l'alimentation des nouvelles charges 20 et/ou à la transmission de données entre les dispositifs de saisie d'informations et de commande des actionneurs situés dans la remorque et les moyens de visualisation et de pilotage situés dans le tracteur en utilisant une polarité pour l'alimentation des charges d'origine et la polarité opposée pour l'alimentation des nouvelles charges et/ou la transmission des données.

A cet effet, comme illustré par la figure 3, le dispositif de l'invention comprend une seconde source de tension 26, de signe opposé à la première source 22, ainsi que des redresseurs 28, 29 de sens approprié, disposés au niveau des charges d'origine 18 afin de leur masquer la seconde source de tension 26 et au niveau des nouvelles charges 20 afin de leur masquer la première source de tension 22.

Selon un mode de réalisation préféré, les redresseurs 28, 29 sont des diodes.

Ainsi, à partir d'un même réseau filaire 16, on obtient un premier réseau pour l'alimentation des charges d'origine avec la première source de tension fonctionnant dans le domaine positif et un second réseau utilisant la seconde source de tension pour l'alimentation des nouvelles charges et/ou le transfert des données fonctionnant dans le domaine négatif.

Les avantages procurés par le dispositif de l'invention utilisant un simple redresseur statique sont les suivants:
- une chute de tension minime, devenant inférieure aux pertes ohmiques dans les fils,
- un commutation qui s'opère dans un domaine linéaire de faible amplitude qui ne génère quasiment pas de bruit électromagnétique,
- aucun courant de fuite à l'état bloqué,
- une sécurité de fonctionnement accrue,
- une simplicité et un faible coût, et
- une mise hors conduction douce et spontanée à l'inversion des tensions.

Sur la figure 2, on a représenté un réseau 16 existant avec une première source de tension 22, une commande par exemple un interrupteur 24, un connecteur d'attelage 14 et une charge 18 dite d'origine. De manière générale, le pôle négatif de la source de tension est relié à la masse comme un des pôles de la charge.

Sur la figure 3, on a représenté le dispositif selon l'invention réalisé à partir du réseau de la figure 2, qui comprend une seconde source de tension 26, de signe opposé à la première, disposée de préférence en parallèle. Les charges d'origine 18 sont séparées de la seconde source de tension 26 par un redresseur 29. Quand l'interrupteur 24 se ferme, ce qui correspond au fonctionnement normal du circuit d'origine, la seconde source 26 limite son courant de sortie et s'efface devant la première source de tension 22. Une nouvelle charge 20 est connectée sur le réseau initial et un redresseur 28 lui assigne son domaine de fonctionnement. Sur la figure 3, le circuit propre au nouveau réseau est marqué en gras.

De préférence, le dispositif comprend des moyens de pilotage de la seconde source qui activent cette dernière uniquement lorsque la première source est inactive.

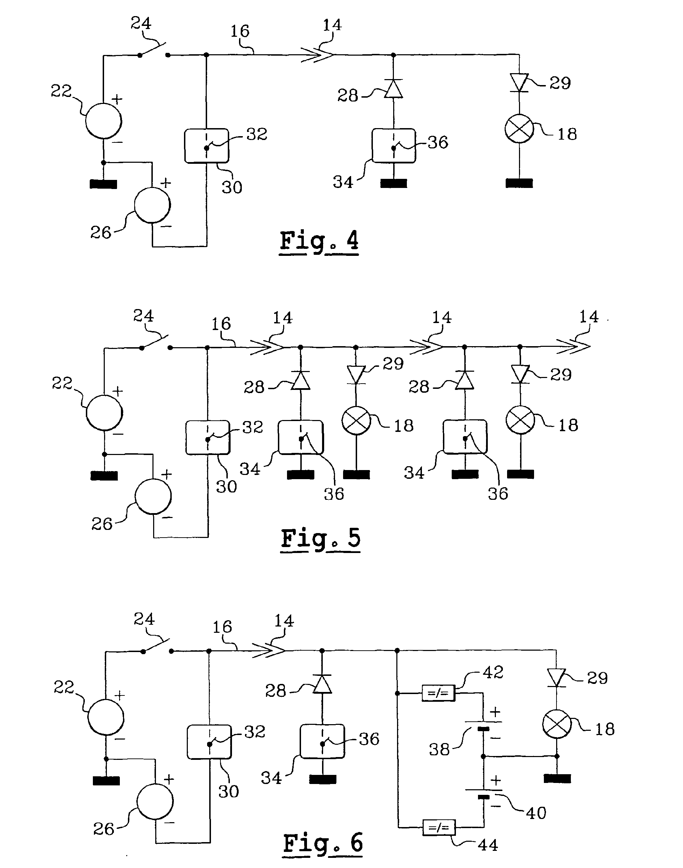

La figure 4 est un schéma illustrant un exemple d'utilisation pour transmettre des données entre deux ordinateurs placés de part et d'autre du connecteur d'attelage, les éléments identiques à ceux des figures 2 et 3 ayant les mêmes références.

L'ordinateur 30 dans le tracteur, appelé maître, comprend en particulier un commutateur rapide 32, permettant la modulation, qui lui permet d'injecter la tension négative de la seconde source de tension 26 sur le réseau 16. L'ordinateur 34 de la remorque, appelé esclave, comprend un commutateur rapide 36 similaire à celui du tracteur.

Lorsque l'interrupteur 24 est fermé, activant ainsi les charges d'origine 18 du réseau, l'ordinateur esclave 34 est isolé par le redresseur 28 et donc temporairement sans alimentation. L'ordinateur maître 30 maintient le commutateur rapide 32 ouvert pour éviter un conflit entre les deux sources de tension.

Lorsque l'interrupteur 24 est ouvert le réseau 16 est disponible. L'ordinateur maître 30 ferme le commutateur rapide 32, ce qui alimente l'ordinateur esclave 34 par l'intermédiaire du redresseur 28. L'ordinateur maître 30 communique vers l'ordinateur esclave 34 en modulant à haute fréquence à travers le réseau 16 par l'intermédiaire du commutateur 32. L'ordinateur esclave 34 possède une réserve d'énergie temporaire lui permettant de fonctionner durant cette modulation du réseau 16.

Dans ce type d'application, les temps d'interruption correspondant à la transmission d'un bit sont de l'ordre de quelques microsecondes à quelques centaines de microseondes alors que la réserve de marche de l'ordinateur esclave 34 est maintenue pendant une centaine de millisecondes.

L'ordinateur esclave 34 répond en actionnant son commutateur 36 qui augmente brièvement le courant consommé à travers le redresseur 29. Ce courant dépasse la valeur limite autorisée par la seconde source de tension 30, et crée un changement d'impédance que l'ordinateur maître 30 perçoit comme une variation de tension, de courant ou les deux.

Lorsque l'interrupteur 24 se ferme, il interrompt ce fonctionnement. Il appartient aux ordinateurs maître et esclave de reprendre le dialogue en cours dès la réouverture de l'interrupteur 24.

La figure 5 est un schéma reprenant l'exemple de la figure 4 dans le cas de remorques multiples, reliées entre elles par des connecteurs d'attelage 14.

Selon cet exemple, chaque remorque comprend un ordinateur esclave 34 relié au réseau par l'intermédiaire d'un redresseur 28.

Dans ce cas, le nombre maximum de remorques est déterminé par la seconde source de tension, la somme des consommations électriques des ordinateurs maître et esclaves devant être inférieure à la limite de courant de la seconde source.

La figure 6 illustre un autre exemple d'utilisation pour recharger des accumulateurs disposés dans la remorque, obtenu à partir du réseau de la figure 4, les éléments identiques ayant les mêmes références.

Ces accumulateurs sont susceptibles de constituer des réserves d'énergie assurant aux dispositifs embarqués une autonomie prolongée utile lorsque la remorque est laissée en stationnement par exemple.

Sur la figure 6, deux accumulateurs 38, 40 sont reliés au réseau 16 et maintenus en charge respectivement par des chargeurs 42, 44. Suivant les besoins, elles sont susceptibles de constituer une source de tension positive ou négative.

Bien entendu, l'invention n'est évidemment pas limitée au mode de réalisation représenté et décrit ci-dessus, mais en couvre au contraire toutes les variantes.

On peut envisager son application à d'autres domaines utilisant un réseau filaire de manière intermittente.

Ainsi, dans le domaine ferroviaire, il existe déjà un réseau de fils électriques reliant les voitures entre elles, utilisé temporairement pour les messages sonores aux voyageurs.

Selon l'invention, ce réseau existant peut être équipé d'une nouvelle source de tension et de nouvelles charges isolées du réseau existant grâce à des redresseurs, les charges d'origine étant isolées de la nouvelle source de tension grâce à des redresseurs.

Enfin, on peut envisager la transformation ou le remplacement de la première source de tension en une source unique susceptible de fournir alternativement deux sources de tension de polarités différentes qui équivaut d'un point de vue fonctionnel à deux sources.

## Revendications

1. Dispositif de transfert de données sur un réseau (1 6) comprenant des charges d'origine (18) alimentées de façon intermittente par une première source (22), **caractérisé en ce qu'**il comprend une seconde source (26) pour alimenter au moins une nouvelle charge (20), des redresseurs (28, 29) étant prévus au niveau des charges d'origine (18) et des nouvelles charges (20) pour les isoler respectivement de la seconde source (26) et de la première source (22).

2. Dispositif selon la revendication 1, **caractérisé en ce qu'**il comprend des moyens pour piloter la seconde source afin de la rendre active uniquement lorsque la première source est inactive.

3. Dispositif selon la revendication 2, **caractérisé en ce qu'**il comprend un ordinateur maître (30) disposé au niveau de la seconde source (26) susceptible de dialoguer avec un ordinateur esclave (34), l'ordinateur maître étant équipé de moyens pour piloter la seconde source.

4. Dispositif selon la revendication 3, **caractérisé en ce que** le dialogue entre les deux ordinateurs est obtenu par modulation à haute fréquence, les deux ordinateurs étant équipés chacun d'un commutateur rapide.

5. Dispositif selon l'une quelconque des revendications précédentes, **caractérisé en ce qu'**il comprend une seule source susceptible de délivrer alternativement deux tensions de polarités différentes.

6. Dispositif selon l'une quelconque des revendications précédentes, **caractérisé en ce que** les redresseurs sont des diodes.

## Claims

1. Device for data transmission on a network (16) comprising existing loads (18) intermittently powered by a primary power source (22), wherein said device comprises a secondary power source (26) powering at least one new load (20), with rectifiers (28,29) within the existing loads (18) and new loads (20) to isolate them respectively from the second power source (26) and primary power source (22).

2. Device according to claim 1, comprising means to activate the secondary power source to activate it only when the primary power source is inactive.

3. Device according to claim 2, comprising a master computer (30) within the secondary source (26) able to communicate with a slave computer (34), wherein the master computer has means to control the secondary source.

4. Device according to claim 3, wherein the communication between the two computers uses a high frequency modulation, both computers having an high speed switch.

5. Device according to any previous claim, wherein one single source is able to alternatively deliver two opposite polarity voltages.

6. Device according to any previous claim, wherein the rectifiers are implemented using diodes.

## Patentansprüche

1. Schaltung des Transfers von Angaben über ein Netz (16), das von Art und Weise mit Unterbrechungen umfaßt durch eine erste Quelle vorangetriebene Lasten des Ursprungs (18) (22) charakterisiert, was er umfaßt eine zweite Quelle (26), um wenigstens eine neue Last (20) voranzutreiben, Gleichrichter (28,29) die bei den Ursprungslasten (18) und den neuen Lasten (20) vorgesehen sind, um sie beziehungsweise von der zweiten Quelle (26) und von der ersten Quelle (22) zu isolieren.

2. Charakterisierte Schaltung nach Anspruch 1 was er von den Mitteln umfaßt, um die zweite Quelle zu steuern, um es zurückzugeben, aktiviert nur, wenn die erste Quelle inaktiv ist.

3. Schaltung nach Anspruch 2, die charakterisiert wurde, was er umfaßt ein bei der zweiten Quelle verfügter Hauptrechner (30) (26), das sich mit einem Sklavenrechner unterhalten kann (34) der Hauptrechner, der mit Mitteln ausgestattet wird, um die zweite Quelle zu steuern.

4. Charakterisierte Schaltung nach Anspruch 3, was der Dialog zwischen den zwei Rechnern durch Hochfrequenzmodulation erhalten wird, die zwei Rechner, die jeden eines schnellen Schalters ausgestattet werden.

5. Charakterisierte Schaltung nach irgendeiner einer der vorhergehenden Anspruche, was er umfaßt nur eine Quelle, die zwei andere Polaritätsspannungen alternativ befreien kann.

6. Charakterisierte Schaltung nach irgendeiner einer der vorhergehenden Anspruche, was die Gleichrichter Dioden sind.
